(19)

Europäisches
Patentamt
European
Patent Office
Office européen
des brevets

(11)     **EP 3 971 799 A1**

(12)     **EUROPEAN PATENT APPLICATION**

(43) Date of publication:
     **23.03.2022  Bulletin 2022/12**

(21) Application number: **21195587.7**

(22) Date of filing: **08.09.2021**

(51) International Patent Classification (IPC):
     ***G06N 20/00*** (2019.01)    ***G06F 8/00*** (2018.01)
     ***G06F 11/36*** (2006.01)

(52) Cooperative Patent Classification (CPC):
     **G06N 20/00; G06F 8/00; G06F 11/3688;
     G06F 11/3692**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **KH MA MD TN**

(30) Priority:  **08.09.2020   US 202063075304 P**

(71) Applicant: **Deutsche Telekom AG**
     **53113 Bonn (DE)**

(72) Inventors:
     • **HACMON, Amit**
       **Beer Sheva 8436327 (IL)**

• **ELOVICI, Yuval**
  **Arugot 7986400 (IL)**
• **SHABTAI, Asaf**
  **Hulda 7684200 (IL)**
• **GROLMAN, Edita**
  **Beer Sheva 8458503 (IL)**
• **BRODT, Oleg**
  **Beer Sheva 8471621 (IL)**
• **FISCHER, Sebastian**
  **12621 Berlin (DE)**
• **FROMM, Ronald**
  **13187 Berlin (DE)**

(74) Representative: **Weickmann & Weickmann
     PartmbB**
     **Postfach 860 820**
     **81635 München (DE)**

(54)   **A SYSTEM AND A METHOD FOR ASSESSMENT OF ROBUSTNESS AND FAIRNESS OF
       ARTIFICIAL INTELLIGENCE (AI) BASED MODELS**

(57)     A system for the assessment of robustness and fairness of AI-based ML models, comprising a data/model profiler for creating an evaluation profile in the form of data and model profiles, based on the dataset and the properties of the ML model; a test recommendation engine that receives data and model profiles from the data/model profiler and recommends the relevant tests to be performed; a test repository that contains all the tests that can be examined; a test execution environment for gathering data related to all the tests that were recommended by the test recommendation engine; a final fairness score aggregation module for aggregating the executed tests results into a final fairness score of the examined model and dataset.

Fig. 1

**Description**

**Field of Invention**

The present invention relates to the field of Artificial Intelligence (AI). More particularly, the present invention relates to a system and a method for robustness (fairness) assessment of Artificial Intelligence (AI)-based Machine Learning (ML) models.

**Background of the Invention**

Various based systems and applications are widely used, based on Artificial Intelligence (AI) and Machine learning (ML). It is common for data scientists to induce many ML models while attempting to provide a solution for different artificial intelligence (AI) tasks. In order to evaluate the fairness and robustness of any AI-based ML models of systems and applications, several steps are required: it is required to detect and measure various properties of ethical bias from different ethical points of view. Then, it is required to aggregate those different ethical perspectives to one final fairness score. This final fairness score provides the data scientists with quantitative estimation, i.e., assessment for the fairness of the examined ML model and can assist them in evaluations and comparisons of different models.

Nowadays, data scientists are mainly focused on improving the performance of ML methods. There are several conventional performance measurements that are used for evaluating ML models. The most popular performance measures are accuracy, precision, recall, etc. However, these performance measures evaluate the performance of AI systems and applications, with no consideration for possible non-ethical consequences. The non-ethical consequences refer to sensitive information about the entities (usually user-related data) which might trigger discrimination towards one or more data distribution groups. Therefore, it is required to define performance measurements for evaluating possible ethical discrimination of AI systems and applications based on ML models.

Bias in machine learning (ML) models is the presence of non-ethical discrimination towards any of the data distribution groups. For example, bias may exist if male and female customers with the same attributes are treated differently. Fairness is defined as the absence of any favoritism toward an individual or a group, based on their inherent or acquired characteristics. An unfair (biased) ML model is a model whose predictions are prone toward a data-specific group [1]. Fairness and bias are considered opposite concepts. When the ML model is completely fair, it means that it has no underlying bias (and vice versa).

A protected feature is a feature that can present unwanted discrimination towards its values. For example, gender/race is a possible protected feature. Privileged value is a distribution sub-group that historically had a systematic advantage [2]. For example, "man" is a privileged value in the protected feature "gender".

Underlying bias may originate from various sources. Examining the fairness of various AI-based models requires examining what the ML model has learned. Generally, ML algorithms rely on the existence of high-quality training data. Obtaining high-quality labeled data is a time-consuming task, which usually requires human effort and expertise. Obtaining sufficient data for a representative dataset, which covers the entire domain properties in which the AI system or application is implemented, is not an easy task. Therefore, ML models are trained using a subsample of the entire population, assuming that any learned patterns on this small subsample can generalize to the entire population. When data instances are chosen non-randomly or without matching them to the nature of the instances used for prediction, the predictions of the ML models become biased toward the dominating group in the training population [1]. An additional source of bias may be the training dataset [1], out of which the bias is inherited. This implies that the data itself contains protected features with a historically privileged value.

Nowadays, various statistical measurements can be used in order to examine the fairness of an ML model. The statistical measurements provide binary results for the existence of bias or a non-scaled bias estimation. For example, the demographic parity measure [4] returns whether the probabilities of a favorable outcome for the protected feature groups are equal, i.e. binary results for the existence or nonexistence of bias. Several measurements provide a non-scaled bias estimation, such as normalized difference [5] and mutual information [6]. There are over twenty-five fairness measurements in the literature, each examines the ML model from a different ethical point of view [3].

It is therefore an object of the present invention to provide a system and method for detecting an underlying bias and the fairness level of an ML model, which can be integrated into Continuous Integration/Continuous Delivery processes.

Other objects and advantages of the invention will become apparent as the description proceeds.

**Summary of Invention**

A system for the assessment of robustness and fairness of AI-based ML models, comprising:

a) a data/model profiler for creating an evaluation profile in the form of data and model profiles, based on the dataset and the properties of the ML model;

b) a test recommendation engine that receives data and model profiles from the data/model profiler and recommends the relevant tests to be performed;

c) a test repository that contains all the tests that can be examined

d) a test execution environment for gathering data related to all the tests that were recommended by the test recommendation engine; and

e) a final fairness score aggregation module for aggregating the executed tests results into a final fairness score of the examined model and dataset.

The system may be a plugin system that is integrated to Continuous Integration/Continuous Delivery) processes.

For a given ML model, the system may be adapted to:

a) choose the suitable bias tests according to the model and data properties;

b) perform each test for each protected feature of the provided ML model and quantify several bias scores;

c) compose a fairness score for each protected feature, using the corresponding bias scores; and

d) aggregate the fairness scores of all the protected features to a single fairness score using a pre-defined aggregation function.

The properties of the model and the data may be one or more of the following:

- Ground truth/true labels;
- risk score;
- domain constraints;
- data structural properties provided to the test execution environment.

The structural properties may be one or more of the following:

- the data encoding type;
- possible class labels;
- Protected features;
- Protected feature threshold;
- Positive class.

Each test in the test execution environment may output a different result in the form of a binary score representing whether underlying bias was detected, or a numeric unscaled score for the level of bias in the examined ML model.

All the tests results of one protected feature may be combined by the final fairness score aggregation module, according to the minimal test score of a protected feature.

The final fairness score may be the minimal final score of the protected feature.

**Brief Description of the Drawings**

The above and other characteristics and advantages of the invention will be better understood through the following illustrative and non-limitative detailed description of preferred embodiments thereof, with reference to the appended drawings, wherein:

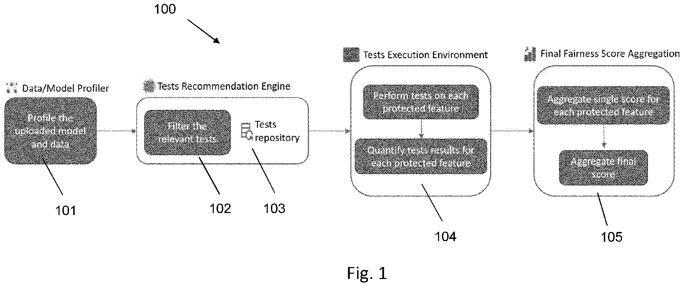

- Fig. 1 shows the general architecture of a system for robustness (fairness) assessment of Artificial Intelligence (AI) based machine learning (ML) models, according to an embodiment of the invention.

**Detailed description of the embodiment of the invention**

The present invention provides a system for robustness (fairness) assessment according to underlying bias (discrimination) of Artificial Intelligence (AI) based machine learning (ML) models. The system (in the form of a plugin, for example) can be integrated into a larger system, for examining the fairness and robustness of ML models which try to fulfill various AI-based tasks. The system detects underlying bias (if exists), by providing an assessment for the AI system/application or for the induced ML model, which the system or application is based on. The proposed system (plugin) evaluates the ML model's tendency for bias in its predictions.

The present invention provides generic fairness (robustness to bias and discrimination) testing the system's (the plugin's) environment, which can be integrated into CI/CD Continuous Integration (CI)/Continuous Delivery (CD) processes. The proposed system (plugin) is designed to serve data scientists during their continuous work of developing ML models. The system performs different tests to examine the ML model's fairness levels. Each test is an examination of a different fairness measurement and estimation for bias, according to the test results. For a given ML model, the system first chooses the suitable bias tests, according to the model and data properties. Second, the system performs each test for each protected feature of the provided ML model and quantifies several bias scores. Then, the system generates a fairness score for each protected feature, using the corresponding bias scores. Finally, the system aggregates the fairness scores of all the protected features to a single fairness score, using a pre-defined aggregation function.

Fig. 1 shows the general architecture of a system for robustness (fairness) assessment of Artificial Intelligence (AI) based machine learning (ML) models, according to an embodiment of the invention. The system 100 comprises a data/model profiler 101 that creates an evaluation profile, based on the dataset and the model's properties. A test recommendation engine 102 receives the data and model profiles from the data/model profiler 101 and recommends the relevant tests to be selected from a test repository 103 that contains all the tests that can be examined. The profiler 101 allows the test recommendation engine 102 to recommend the most appropriate tests. A test execution environment 104 gathers all the tests that were recommended by the test recommendation engine 102. A final fairness score aggregation module (component) 105 aggregates the executed test results into a final fairness score of the examined model and dataset.

The Data/Model Profiler

The data/model profiler 101 creates an evaluation profile, based on the dataset and the model's properties. The profiler 101 allows the test recommendation engine 102 to recommend the most appropriate tests. The properties of the model and the data are derived from various tests requirements. If one of the test requirements is not provided, the test recommendation engine will recommend tests, which can be performed without the missing test requirements.

The properties of the model and the data are:

- **Ground truth/true labels** - the existence of ground truth for every record in the provided dataset. Some tests require the ground truth labels of every record in the given dataset.
- **Risk score** - the existence of risk score for every record in the provided dataset. Some tests require a numeric risk score of every record in the given dataset. For example, given an ML classification model which is used in a financial institute to decide whether to grant a loan, a risk score can be considered as the payment period of the loan. The longer the loan payment period, the riskier it is for the financial institute to grant that loan.
- **Domain constraints** - pre-defined constraints for the data and model domains. Some tests require pre-defined domain-related constraints. For example, given an ML classification model which is used in a financial institute to decide whether to grant a loan, equality for different zip codes can be considered as a domain constraint. The tests that consider the domain constraint will perform the test with specific consideration for fairness between applicants having different zip codes.

Additional properties that are gathered by the data/model profiler are the provided data structural properties. The data structural properties guide the test execution environment during the test execution. Such properties are:

- **Data encoding** - the data encoding type. For example, one-hot encoding (one hot encoding is a process of converting categorical data variables so they can be provided to machine learning algorithms to improve predictions), label encoding (a data preprocessing technique to convert the categorical column data type to numerical (from string to numeric). This is done because the machine learning model doesn't understand string characters and therefore there should be a provision to encode them in a machine-understandable format. In the Label Encoding method, the categories present under the categorical features are converted in a manner that is associated with hierarchical separation) or non-encoding at all. This property dictates the way the protected feature is processed. For example, in one-hot encoding, the values of a protected feature are spread over several columns. During the test execution, the protected feature will need to be "constructed" from those columns.
- **Possible class labels** - in case a list of all possible classes in the data is not provided, the bias estimation can be performed using the provided possible labels. For example, if one of the provided datasets contains the classes {1,2} and the class {3} appears in other datasets, then the possible class labels are {1,2,3}.
- **Protected feature** - which attribute is the one that should be referred to as the protected feature. In order to perform the bias estimation, the protected feature should be defined. It is also possible to use all the features, when treating each feature as if it was defined as the protected feature.

- **Protected feature threshold** - all of the tests are suitable for nominal features only, while protected features may be also numeric. In order to discretize a numeric protected feature, the system receives a threshold and discretizes the protected feature by it. For example, the protected feature "Age" can be discretized by the threshold "51" to two value groups - below 51 and above 51.

- **Positive class** - some of the tests receive as input the favorable class, in order to perform the evaluation respectively. For example, given an ML classification model which is used in a financial institute to decide whether to grant a loan, the class "approved" can be considered as a favorable class.

Test Recommendation Engine

The test recommendation engine 102 receives the data and model profiles from the data/model profiler 101 and recommends the relevant tests to be selected from the test's repository 103.

The tests repository 103 contains all the tests that can be examined. Currently, the tests repository contains 25 different tests that are gathered from the literature and being updated constantly. The currently existing tests in the test repository 103 are specified below. Each test determines whether underlying bias exists in the ML model. The following example explains how each of the current 25 tests is used in order to detect the existence of bias (discrimination): Consider an AI task for classifying individuals to be engineers given their properties, such as gender, education and other background features. In this example, "Gender" (male/female) is considered as the protected feature.

- **Statistical Parity Difference** [4] - the difference between the probabilities of a favorable outcome for the protected feature groups. For example, the probability of identifying an engineer should be the same given a female or male.
- **Disparate Impact** [7] - the ratio between the probabilities of a favorable outcome for the protected feature groups. For example, the ratio between the probabilities of identifying an engineer given a female and male should be equal.
- **Sensitivity (TP rate)** [7] - the sensitivity of the protected feature groups should be the same. For example, the probability of females to be engineers and to be classified as engineers should be equal to the probability of males to be engineers and to be classified as engineers.
- **Specificity (TN rate)** [7] - the specificity for the protected feature groups should be the same. For example, the probability of females not to be engineers and to be classified as non-engineers should be equal to the probability of men to be engineers and to be classified as non-engineers.
- **Likelihood ratio positive (LR+)** [7] - the likelihood ratio positive for the protected feature groups should be the same. The likelihood ratio value for one feature group is the ratio between sensitivity and its complement value. For example, the opposite ratio probability of women to be engineers and to be classified as engineers, should be equal to the opposite ratio probability of men to be engineers and to be classified as engineers.
- **Balance Error Rate (BER)** [7] - the balance error rate for the protected feature groups should be the same. For example, the level of misclassified women should be equal to the level of misclassified men.
- **Calibration** [8] - given a risk score, the probability for the positive class for the protected feature groups should be the same. For example, the probability of women with a specific risk score to be classified as engineers should be equal to the probability of men with a specific risk score to be classified as engineers.
- **Prediction Parity** [8] - given a risk score threshold $^sHR$ , the prediction parity for the protected feature groups should be the same. For example, the probability of women with a risk score above the threshold to be classified as engineers should be equal to the probability of men with a risk score above the threshold to be classified as engineers.
- **Error rate balance with score (ERBS)** [8] - given a risk score threshold $^sHR$ , the error rate balance value for the protected feature groups should be the same. For example, the probability of women that were classified as non-engineers, to have an above-the-threshold score, and the probability of women that were classified as engineers, to have a below-the-threshold score, should be equal to the probability of men that were classified as non-engineers, to have an above-the-threshold score, and the probability of men that were classified as engineers, to have a below-the-threshold score.
- **Equalized odds** [9] - also referred to as conditional procedure accuracy equality or disparate mistreatment. Given a true label, the odds for the positive outcome for the protected feature groups should be the same. For example, given a specific true label (engineer/non-engineer), the probability of women to be classified as engineers should be equal to the probability of men to be classified as engineers.
- **Equal opportunity** [9] - given a positive true label, the odds for the positive outcome for the protected feature groups should be the same. For example, the probability of women engineers to be classified as engineers should be equal to the probability of men engineers to be classified as engineers.
- **Treatment equality** [3] - the treatment for the protected feature groups should be the same. For example, the ratio between the probability of women engineers to be classified as non-engineers and the probability of a non-engineer woman to be classified as engineers should be equal to the ratio between the probability of men engineers to be classified as non-engineers and the probability of non-engineer men to be classified as engineers.
- **Conditional statistical parity** [1] - given a domain constraint L, the statistical parity for the protected feature groups should be the same. For example, given a domain constraint, the probability of women to be classified as engineers should be equal to the probability of men to be classified as engineers (domain constraint can be equal risk score).

- **Positive prediction value (precision)** [10] - the positive prediction value for the protected feature groups should be the same. For example, the probability of women to be engineers and to be classified as engineers, from all women which are classified as engineers, should be equal to the probability of men to be engineers and to be classified as engineers, out of all men which are classified as engineers.

- **Negative prediction value** [10] - the negative prediction value for the protected feature groups should be the same. For example, the probability of women to be non-engineers and to be classified as non-engineers, from all women which are classified as non-engineers, should be equal to the probability of men to be non-engineers and to be classified as non-engineers, out of all men which are classified as non-engineers.

- **False positive rate** [11] - the false positive rate for the protected feature groups should be the same. For example, the probability of women to be non-engineers and to be classified as engineers, out of all women who are non-engineers, should be equal to the probability of men to be non-engineers and to be classified as engineers, out of all men who are non-engineers.

- **False-negative rate** [11] - the false negative rate for the protected feature groups should be the same. For example, the probability of women to be engineers and to be classified as non-engineers, out of all women who are engineers, should be equal to the probability of men to be engineers and to be classified as non-engineers, out of all men who are engineers.

- **Accuracy** [11] - the accuracy for the protected feature groups should be the same. For example, the probability of women to be correctly classified should be equal to the probability of men to be correctly classified.

- **Error rate balance (ERB)** [10] - the FPR and FNR for the protected feature groups should be the same. For example, the probability of women to be non-engineers and to be classified as engineers, out of all women who are non-engineers, and the probability of women to be engineers and to be classified as non-engineers, out of all women who are engineers, should be equal to the probability of men to be non-engineers and to be classified as engineers, out of all men who are non-engineers, and the probability of men to be engineers and to be classified as non-engineers, out of all men who are engineers.

- **Normalized difference** [12] - the normalized difference ranges between [-1,1], where 0 indicates the absence of bias. For example, (male advantage - female advantage) / MAX (male relative advantage, female relative advantage).

- **Elift ratio** [12] - the elift ratio ranges between [0, +∞], where 1 indicates the absence of bias. For example, measures the male advantage: the probability of men to be classified as engineers over (ratio) the overall probability to be classified as engineers.

- **Odds Ratio** [12] - the odds ratio ranges between [0, +∞], where 1 indicates the absence of bias. For example, (female advantage * male disadvantage) / (female disadvantage * male advantage).

- **Mutual Information** [12] - mutual information measures the difference in the contribution of different feature groups to the model outcome. For example, the difference in the contribution of a "gender" group (males/females) to the model outcome.

- **Balance residuals** [12] - balance residuals measure the difference between the errors of two protected feature groups. For example, the difference between the errors rate of the two protected feature groups (males and females).

- **Conditional use accuracy equality** [1] - the probability of subjects with positive predictive values to be correctly classified to the positive class and the probability of subjects with negative predictive value to be correctly classified to the negative class. For example, the probability of women to be correctly classified as engineers and the probability of women to be correctly classified as non-engineers, should be equal to the probability of men to be correctly classified as engineers and the probability of men to be correctly classified as non-engineers.

## Test Execution Environment

The test execution environment 104 gathers all the tests that were recommended by the test recommendation engine. Each test outputs a different result in the form of a binary score representing whether underlying bias was detected, or a numeric unscaled score for the level of bias in the model. Thus, following the execution, the test execution environment 104 transforms each of the test's outputs to a scaled numeric fairness score. The output transformation is performed according to the type of the test result:

- Binary score process - the binary score is a result of tests whose structure is an equation. If the equation is satisfied, then the test result is "true", otherwise it is "false". In order to process it into a single numeric score, the difference between the two sides of the equation is calculated. The calculated difference is scaled to be between [0,1] if necessary, and the result is the test final score.

- Unscaled score process - the unscaled score is a result of tests that behave as estimations in nature. This kind of tests has a value that represents the "ultimate fairness". As the unscaled score is closer to that "ultimate fairness" value, the result is considered fairer. In order to scale the unscaled score, the values are scaled in a way that the "ultimate fairness" is 1 and the final score is in the range [0,1].

In table 1 below, each test (from the 25 tests which are currently used by the proposed system) is categorized to its corresponding process.

**Table 1**

| Binary score process | Unscaled score process |
|---|---|
| Statistical Parity Difference | Normalized difference |
| Sensitivity (TP rate) | Elift ratio |
| Specificity (TN rate) | Odds Ratio |
| Likelihood ratio positive (LR+) | Mutual Information |
| Balance Error Rate (BER) | Balance residuals |
| Calibration | Disparate Impact |
| Prediction Parity | |
| Error rate balance with score (ERBS) | |
| Equalized odds | |
| Equal opportunity | |
| Treatment equality | |
| Conditional statistical parity | |
| Positive prediction value (precision) | |
| Negative prediction value | |
| False positive rate | |
| False negative rate | |
| Accuracy | |
| Error rate balance (ERB) | |
| Conditional use accuracy equality | |

In addition, in the case of non-binary protected features, the proposed system will perform the test for each protected feature value in the form of one vs. all. For example, the case of the feature "disability" that contains the values of "no disability", "minor disability" and "major disability". The system will execute the test three times: considering the classes "no disability" vs. not "no disability", "minor disability" vs. not "minor disability" and "major disability" vs. not "major disability". In order to consider the worst discrimination, the test output will be the minimum test result out of the three.
In the next parts of the description, there is an elaboration on the specific process for each test evaluation and use in the following notation:

$y \in C$    Model prediction

$c_i \in C$    Specific Class

$y_t \in C$    True Label

$f_p \in F$    Protected feature

$s(x)$    Risk score of x

**Statistical Parity Difference** - this test originally produces a binary score, therefore processed by binary score process. Statistical parity measurement yields the statistical parity difference that states:

$$Statistical\ Parity\ Difference = SPD = \mathrm{P}\big(y = c_i \big| f_p \neq v_f\big) - \mathrm{P}\big(y = c_i \big| f_p = v_f\big)$$

The Statistical Parity Difference test performs the following calculation for the protected feature values, in order to produce a single scaled fairness score result:

$$result = 1 - MAX(|SPD|)$$

**Disparate Impact** - this test originally produces an unscaled score, therefore processed by unscaled score process. Disparate impact states:

$$Disparate\ Impact = DI = \frac{Pr(y = c_i | f_p \neq v_f)}{Pr(y = c_i | f_p = v_f)}$$

The test performs the following calculation for the protected feature values, in order to produce a single scaled fairness score result:

$$result = \begin{cases} MIN(DI) > 0.8 & 1 \\ MIN(DI) \leq 0.8 & \dfrac{MIN(DI)}{0.8} \end{cases}$$

**Sensitivity (TP rate)** - this test originally produces a binary score, therefore processed by binary score process. Sensitivity (TP rate) states:

$$\frac{TP_{f_p = v_f}}{TP_{f_p = v_f} + FN_{f_p = v_f}} = \frac{TP_{f_p \neq v_f}}{TP_{f_p \neq v_f} + FN_{f_p \neq v_f}}$$

The test performs the following calculation for the protected feature values, in order to produce a single scaled fairness score result:

$$Sensitivity = SN = \left| \frac{TP_{f_p = v_f}}{TP_{f_p = v_f} + FN_{f_p = v_f}} - \frac{TP_{f_p \neq v_f}}{TP_{f_p \neq v_f} + FN_{f_p \neq v_f}} \right|$$

$$result = 1 - MAX(SN)$$

**Specificity (TN rate)** - this test originally produces a binary score, therefore processed by binary score process. Specificity (TN rate) states:

$$\frac{TN_{f_p = v_f}}{TN_{f_p = v_f} + FP_{f_p = v_f}} = \frac{TN_{f_p \neq v_f}}{TN_{f_p \neq v_f} + FP_{f_p \neq v_f}}$$

The test performs the following calculation for the protected feature values, in order to produce a single scaled fairness score result:

$$\text{Specificity} = SP = \left| \frac{TN_{f_p=v_f}}{TN_{f_p=v_f} + FP_{f_p=v_f}} - \frac{TN_{f_p \neq v_f}}{TN_{f_p \neq v_f} + FP_{f_p \neq v_f}} \right|$$

$$result = 1 - MAX(SP)$$

**Likelihood ratio positive (LR+)** - this test originally produces a binary score, therefore processed by binary score process. Likelihood ratio positive (LR+) states:

$$\frac{\dfrac{TP_{f_p=v_f}}{TP_{f_p=v_f} + FN_{f_p=v_f}}}{1 - \dfrac{TP_{f_p=v_f}}{TP_{f_p=v_f} + FN_{f_p=v_f}}} = \frac{\dfrac{TP_{f_p \neq v_f}}{TP_{f_p \neq v_f} + FN_{f_p \neq v_f}}}{1 - \dfrac{TP_{f_p \neq v_f}}{TP_{f_p \neq v_f} + FN_{f_p \neq v_f}}}$$

The test performs the following calculation for the protected feature values, in order to produce a single scaled fairness score result:

$$LR_+ = \left| \frac{\dfrac{TP_{f_p=v_f}}{TP_{f_p=v_f} + FN_{f_p=v_f}}}{1 - \dfrac{TP_{f_p=v_f}}{TP_{f_p=v_f} + FN_{f_p=v_f}}} - \frac{\dfrac{TP_{f_p \neq v_f}}{TP_{f_p \neq v_f} + FN_{f_p \neq v_f}}}{1 - \dfrac{TP_{f_p \neq v_f}}{TP_{f_p \neq v_f} + FN_{f_p \neq v_f}}} \right|$$

$$result = 1 - \frac{MAX(LR_+)}{\dfrac{data\ size}{2}}$$

**Balance Error Rate (BER)** - this test originally produces a binary score, therefore processed by binary score process. Likelihood ratio positive (LR+) states:

$$\frac{FP_{f_p=v_f} + FN_{f_p=v_f}}{2} = \frac{FP_{f_p \neq v_f} + FN_{f_p \neq v_f}}{2}$$

The test performs the following calculation for the protected feature values, in order to produce a single scaled fairness score result:

$$BER = \left| \frac{FP_{f_p=v_f} + FN_{f_p=v_f}}{2} - \frac{FP_{f_p \neq v_f} + FN_{f_p \neq v_f}}{2} \right|$$

$$result = 1 - \frac{MAX(BER)}{\dfrac{data\ size}{2}}$$

**Calibration** - this test originally produces a binary score, therefore processed by binary score process. Calibration states:

$$P\left(y = 1 | s(x), f_p = v_f\right) = P\left(y = 1 | s(x), f_p \neq v_f\right)$$

The test performs the following calculation for the protected feature values, in order to produce a single scaled

fairness score result:

$$CL_{var} \; for \; \forall s \in S = variance\big(P(y = 1|S = s, f_p = v_f)\big)$$

$$result = 1 - MIN(CL_{var})$$

**Prediction Parity** - this test originally produces a binary score, therefore processed by binary score process. Prediction Parity states:

$$P\big(y = 1|S > {}^sHR, f_p = v_f\big) = P\big(y = 1|S > {}^sHR, f_p \neq v_f\big)$$

The test performs the following calculation for the protected feature values, in order to produce a single scaled fairness score result:

$$result = variance\big(P(y = 1|S > {}^sHR, f_p = v_f)\big)$$

**Error rate balance with score (ERBS)** - this test originally produces a binary score, therefore processed by binary score process. Error rate balance with score (ERBS) states:

$$P\big(S > {}^sHR|\hat{y} = 0, f_p = v_f\big) = P\big(S > {}^sHR|\hat{y} = 0, f_p \neq v_f\big)$$

*and*

$$P\big(S \leq {}^sHR|\hat{y} = 1, f_p = v_f\big) = P\big(S \leq {}^sHR|\hat{y} = 1, f_p \neq v_f\big)$$

The test performs the following calculation for the protected feature values, in order to produce a single scaled fairness score result:

$$result = MIN\big(variance(P(S > {}^sHR|\hat{y} = 0, f_p = v_f)), variance(P(S \leq {}^sHR|\hat{y} = 1, f_p = v_f))\big)$$

**Equalized odds** - this test originally produces a binary score, therefore processed by binary score process. Equalized odds states:

$$P\big(y = 1|f_p = v_f, y_t = c_i\big) = P\big(y = 1|f_p \neq v_f, y_t = c_i\big)$$

The test performs the following calculation for the protected feature values, in order to produce a single scaled fairness score result:

$$EO_{var} \; for \; \forall c_i \in C = variance\big(P(y = 1|f_p = v_f, y_t = c_i)\big)$$

$$result = 1 - MIN(EO_{var})$$

**Equal opportunity** - this test originally produces a binary score, therefore processed by binary score process. Equal opportunity states:

$$P\big(y = 1|f_p = v_f, y_t = 1\big) = P\big(y = 1|f_p \neq v_f, y_t = 1\big)$$

The test performs the following calculation for the protected feature values, in order to produce a single scaled fairness score result:

$$result = variance\left(P\big(y = 1|f_p = v_f, y_t = 1\big)\right)$$

**Treatment equality** - this test originally produces a binary score, therefore processed by binary score process. Treatment equality states:

$$\frac{FN_{f_p = v_f}}{FP_{f_p = v_f}} = \frac{FN_{f_p \neq v_f}}{FP_{f_p \neq v_f}}$$

The test performs the following calculation for the protected feature values, in order to produce a single scaled fairness score result:

$$TE = \left|\frac{FN_{f_p = v_f}}{FP_{f_p = v_f}} - \frac{FN_{f_p \neq v_f}}{FP_{f_p \neq v_f}}\right|$$

$$result = 1 - \frac{MAX(TE)}{data\ size}$$

**Conditional statistical parity** - this test originally produces a binary score, therefore processed by binary score process. Conditional statistical parity states:

$$P\big(y = 1|f_p = v_f, L\big) = P\big(y = 1|f_p \neq v_f, L\big)$$

The test performs the following calculation for the protected feature values, in order to produce a single scaled fairness score result:

$$CSP = \left|P\big(y = 1|f_p = v_f, L\big) - P\big(y = 1|f_p \neq v_f, L\big)\right|$$

$$result = 1 - MAX(CSP)$$

**Positive prediction value (precision)** - this test originally produces a binary score, therefore processed by binary score process. Positive prediction value (precision) states:

$$\frac{TP_{f_p = v_f}}{TP_{f_p = v_f} + FP_{f_p = v_f}} = \frac{TP_{f_p \neq v_f}}{TP_{f_p \neq v_f} + FP_{f_p \neq v_f}}$$

The test performs the following calculation for the protected feature values, in order to produce a single scaled fairness score result:

$$PPV = \left| \frac{TP_{f_p=v_f}}{TP_{f_p=v_f} + FP_{f_p=v_f}} - \frac{TP_{f_p \neq v_f}}{TP_{f_p \neq v_f} + FP_{f_p \neq v_f}} \right|$$

$$result = 1 - MAX(PPV)$$

**Negative prediction value** - this test originally produces a binary score, therefore processed by binary score process. Negative prediction value states:

$$\frac{TN_{f_p=v_f}}{TN_{f_p=v_f} + FN_{f_p=v_f}} = \frac{TN_{f_p \neq v_f}}{TN_{f_p \neq v_f} + FN_{f_p \neq v_f}}$$

The test performs the following calculation for the protected feature values, in order to produce a single scaled fairness score result:

$$NPV = \left| \frac{TN_{f_p=v_f}}{TN_{f_p=v_f} + FN_{f_p=v_f}} - \frac{TN_{f_p \neq v_f}}{TN_{f_p \neq v_f} + FN_{f_p \neq v_f}} \right|$$

$$result = 1 - MAX(NPV)$$

**False positive rate** - this test originally produces a binary score, therefore processed by binary score process. False positive rate states:

$$\frac{FP_{f_p=v_f}}{FP_{f_p=v_f} + TN_{f_p=v_f}} = \frac{FP_{f_p \neq v_f}}{FP_{f_p \neq v_f} + TN_{f_p \neq v_f}}$$

The test performs the following calculation for the protected feature values, in order to produce a single scaled fairness score result:

$$FPR = \left| \frac{FP_{f_p=v_f}}{FP_{f_p=v_f} + TN_{f_p=v_f}} - \frac{FP_{f_p \neq v_f}}{FP_{f_p \neq v_f} + TN_{f_p \neq v_f}} \right|$$

$$result = 1 - MAX(FPR)$$

**False negative rate** - this test originally produces a binary score, therefore processed by binary score process. False negative rate states:

$$\frac{FN_{f_p=v_f}}{FN_{f_p=v_f} + TP_{f_p=v_f}} = \frac{FN_{f_p \neq v_f}}{FN_{f_p \neq v_f} + TP_{f_p \neq v_f}}$$

The test performs the following calculation for the protected feature values, in order to produce a single scaled fairness score result:

$$FNR = \left| \frac{FN_{f_p=v_f}}{FN_{f_p=v_f} + TP_{f_p=v_f}} - \frac{FN_{f_p \neq v_f}}{FN_{f_p \neq v_f} + TP_{f_p \neq v_f}} \right|$$

$$result = 1 - MAX(FNR)$$

**Accuracy** - this test originally produces a binary score, therefore processed by binary score process. Accuracy states:

$$\frac{TN_{f_p=v_f} + TP_{f_p=v_f}}{TN_{f_p=v_f} + TP_{f_p=v_f} + FN_{f_p=v_f} + FP_{f_p=v_f}} = \frac{TN_{f_p \neq v_f} + TP_{f_p \neq v_f}}{TN_{f_p \neq v_f} + TP_{f_p \neq v_f} + FN_{f_p \neq v_f} + FP_{f_p \neq v_f}}$$

The test performs the following calculation for the protected feature values, in order to produce a single scaled fairness score result:

$$ACC = \left| \frac{TN_{f_p=v_f} + TP_{f_p=v_f}}{TN_{f_p=v_f} + TP_{f_p=v_f} + FN_{f_p=v_f} + FP_{f_p=v_f}} \right.$$
$$\left. - \frac{TN_{f_p \neq v_f} + TP_{f_p \neq v_f}}{TN_{f_p \neq v_f} + TP_{f_p \neq v_f} + FN_{f_p \neq v_f} + FP_{f_p \neq v_f}} \right|$$

$$result = 1 - MAX(ACC)$$

**Error rate balance (ERB)** - this test originally produces a binary score, therefore processed by binary score process. Error rate balance (ERB) states:

$$\frac{FP_{f_p=v_f}}{FP_{f_p=v_f} + TN_{f_p=v_f}} = \frac{FP_{f_p \neq v_f}}{FP_{f_p \neq v_f} + TN_{f_p \neq v_f}}$$

And

$$\frac{FN_{f_p=v_f}}{FN_{f_p=v_f} + TP_{f_p=v_f}} = \frac{FN_{f_p \neq v_f}}{FN_{f_p \neq v_f} + TP_{f_p \neq v_f}}$$

The test performs the following calculation for the protected feature values, in order to produce a single scaled fairness score result:

$$result = MIN(FPR, FNR)$$

**Normalized difference** - this test originally produces an unscaled score, therefore processed by unscaled score process. Normalized difference states:

$$\text{Normalized difference} = ND = \frac{P(y=1|f_p \neq v_f) - P(y=1|f_p = v_f)}{MAX\left( \frac{P(y=1)}{p(f_p \neq v_f)} \ , \ \frac{p(y=0)}{P(f_p = v_f)} \right)}$$

The test performs the following calculation for the protected feature values, in order to produce a single scaled fairness score result:

$$result = 1 - MAX(|ND|)$$

**Elift ratio** - this test originally produces an unscaled score, therefore processed by unscaled score process. Elift ratio states:

$$\text{Elift ratio} = ER = \frac{P(y = 1 | f_p \neq v_f)}{P(y = 1)}$$

The test performs the following calculation for the protected feature values, in order to produce a single scaled fairness score result:

$$SER = \begin{cases} ER \leq 1 & ER \\ ER > 1 & \dfrac{1}{ER} \end{cases}$$

$$result = MIN(SER)$$

**Odds Ratio** - this test originally produces an unscaled score, therefore processed by unscaled score process. Odds Ratio states:

$$\text{Odds Ratio} = OR = \frac{P(y = 1 | f_p = v_f) * P(y = 0 | f_p \neq v_f)}{P(y = 0 | f_p = v_f) * P(y = 1 | f_p \neq v_f)}$$

The test performs the following calculation for the protected feature values, in order to produce a single scaled fairness score result:

$$SOR = \begin{cases} OR \leq 1 & OR \\ OR > 1 & \dfrac{1}{OR} \end{cases}$$

$$result = MIN(SOR)$$

**Mutual Information** - this test originally produces an unscaled score, therefore processed by unscaled score process. Mutual Information states:

$$\text{Mutual Information} = MI = \frac{I(y, f_p)}{\sqrt{H(y) * H(f_p)}}$$

$$I(y, f_p) = \sum_{y, f_p} P(f_p, y) * log\left(\frac{P(f_p, y)}{P(f_p) * P(y)}\right)$$

$$H(x) = -\sum_{x} P(x) * log(P(x))$$

The test performs the following calculation for the protected feature values, in order to produce a single scaled fairness score result:

$$result = 1 - \max(MI)$$

**Balance residuals** - this test originally produces an unscaled score, therefore processed by unscaled score process. Balance residuals states:

$$\text{Balance residuals} = BR = \frac{\sum_{f_p=v_f} |y_t - y|}{|f_p = v_f|} - \frac{\sum_{f_p \neq v_f} |y_t - y|}{|f_p \neq v_f|}$$

The test performs the following calculation for the protected feature values, in order to produce a single scaled fairness score result:

$$result = 1 - \max(BR)$$

**Conditional use accuracy equality** - this test originally produces a binary score, therefore processed by binary score process. Conditional use accuracy equality states:

$$TP_{f_p=v_f} = TP_{f_p \neq v_f}$$

And

$$TN_{f_p=v_f} = TN_{f_p \neq v_f}$$

The test performs the following calculation for the protected feature values, in order to produce a single scaled fairness score result:

$$\text{CUAE} = MAX\left(\left|TP_{f_p=v_f} - TP_{f_p \neq v_f}\right|, \left|TN_{f_p=v_f} - TN_{f_p \neq v_f}\right|\right)$$

$$result = 1 - MAX(\text{CUAE})$$

Final Fairness Score Aggregation

the final fairness score aggregation module (component) 105 aggregates the executed test results into a final fairness score of the examined model and dataset. The aggregation component 105 first aggregates its final score for each protected feature, and then aggregates them to a single overall fairness score.

In order to combine all the tests results of one protected feature, many different mathematical functions can be used. For example, the system considers the protected feature's minimal test score. In order to combine all the final scores from all the protected features which were examined, the system might consider the protected feature's minimal final score as the final fairness score.

The above examples and description have of course been provided only for the purpose of illustrations, and are not intended to limit the invention in any way. As will be appreciated by the skilled person, the invention can be carried out in a great variety of ways, employing more than one technique from those described above, all without exceeding the scope of the invention.

A system for the assessment of robustness and fairness of AI-based ML models, comprising a data/model profiler for creating an evaluation profile in the form of data and model profiles, based on the dataset and the properties of the ML model; a test recommendation engine that receives data and model profiles from the data/model profiler and recommends the relevant tests to be performed; a test repository that contains all the tests that can be examined; a test execution environment for gathering data related to all the tests that were recommended by the test recommendation engine; a final fairness score aggregation module for aggregating the executed tests results into a final fairness score of the examined model and dataset.

## References

[1] N. Mehrabi, F. Morstatter, N. Saxena, K. Lerman and A. Galstyan, "A Survey on Bias and Fairness in Machine Learning," in arXiv preprint arXiv:1908.09635., 23 Aug, 2019.

[2] Bellamy, R. K., Dey, K., Hind, M., Hoffman, S. C., Houde, S., Kannan, K., ... & Nagar, S. (2018). AI Fairness 360: An extensible toolkit for detecting, understanding, and mitigating unwanted algorithmic bias. arXiv preprint arXiv:1810.01943.

[3] Verma, S., & Rubin, J. (2018, May). Fairness definitions explained. In 2018 IEEE/ACM International Workshop on Software Fairness (FairWare) (pp. 1-7). IEEE.

[4] Dwork, C., Hardt, M., Pitassi, T., Reingold, O., & Zemel, R. (2012, January). Fairness through awareness. In Proceedings of the 3rd innovations in theoretical computer science conference (pp. 214-226).

[5] Zliobaite, I. (2015). On the relation between accuracy and fairness in binary classification. arXiv preprint arXiv:1505.05723.

[6] Fukuchi, K., Kamishima, T., & Sakuma, J. (2015). Prediction with model-based neutrality. IEICE TRANSACTIONS on Information and Systems, 98(8), 1503-1516.

[7] Feldman, M., Friedler, S. A., Moeller, J., Scheidegger, C., & Venkatasubramanian, S. (2015, August). Certifying and removing disparate impact. In proceedings of the 21th ACM SIGKDD international conference on knowledge discovery and data mining (pp. 259-268).

[8] Chouldechova, A. (2017). Fair prediction with disparate impact: A study of bias in recidivism prediction instruments. Big data, 5(2), 153-163.

[9] Hardt, M., Price, E., & Srebro, N. (2016). Equality of opportunity in supervised learning. In Advances in neural information processing systems (pp. 3315-3323).

[10] Narayanan, A. (2018, February). Translation tutorial: 21 fairness definitions and their politics. In Proc. Conf. Fairness Accountability Transp., New York, USA.

[11] Berk, R., Heidari, H., Jabbari, S., Kearns, M., & Roth, A. (2018). Fairness in criminal justice risk assessments: The state of the art. Sociological Methods & Research, 0049124118782533.

[12] Žliobaitė, I. (2017). Measuring discrimination in algorithmic decision making. Data Mining and Knowledge Discovery, 31(4), 1060-1089.

## Claims

1. A system for the assessment of robustness and fairness of AI-based ML models, comprising:

   f) a data/model profiler, for creating an evaluation profile in the form of data and model profiles, based on the dataset and the properties of said ML model;
   g) a test recommendation engine that receives data and model profiles from the data/model profiler and recommends the relevant tests to be performed;

h) a test repository that contains all the tests that can be examined

i) a test execution environment for gathering data related to all the tests that were recommended by said test recommendation engine; and

j) a final fairness score aggregation module for aggregating the executed tests results into a final fairness score of the examined model and dataset.

2. A system according to claim 1, being a plugin system that is integrated into Continuous Integration/Continuous Delivery) processes.

3. A system according to claim 1, which for a given ML model, is adapted to:

e) choose the suitable bias tests according to the model and data properties;

f) perform each test for each protected feature of the provided ML model and quantify several bias scores;

g) compose a fairness score for each protected feature, using the corresponding bias scores; and

h) aggregate the fairness scores of all the protected features to a single fairness score using a pre-defined aggregation function.

4. A system according to claim 1, which the properties of the model and the data are one or more of the following:

- Ground truth/true labels;
- risk score;
- domain constraints;
- data structural properties provided to the test execution environment.

5. A system according to claim 4, in which the structural properties are one or more of the following:

- the data encoding type;
- possible class labels;
- Protected features;
- Protected feature threshold;
- Positive class.

6. A system according to claim 1, in which each test in the test execution environment outputs a different result in the form of a binary score representing whether underlying bias was detected, or a numeric unscaled score for the level of bias in the examined ML model.

7. A system according to claim 1, in which all the tests results of one protected feature are combined by the final fairness score aggregation module, according to the minimal test score of a protected feature.

8. A system according to claim 7, in which the final fairness score is the minimal final score of the protected feature.

100

Data/Model Profiler

Profile the uploaded model and data

Tests Recommendation Engine

Filter the relevant tests

Tests repository

Tests Execution Environment

Perform tests on each protected feature

Quantify tests results for each protected feature

Final Fairness Score Aggregation

Aggregate single score for each protected feature

Aggregate final score

101
102 103
104
105

Fig. 1

Europäisches
Patentamt

European
Patent Office

Office européen
des brevets

# EUROPEAN SEARCH REPORT

**Application Number**

EP 21 19 5587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KACPER SOKOL ET AL: "FAT Forensics: A Python Toolbox for Algorithmic Fairness, Accountability and Transparency", ARXIV.ORG, CORNELL UNIVERSITY LIBRARY, 201 OLIN LIBRARY CORNELL UNIVERSITY ITHACA, NY 14853, 11 September 2019 (2019-09-11), XP081481760, * Sections 1-3; figures 2, 4(a) * | 1-8 | INV. G06N20/00 G06F8/00 G06F11/36 |
| A | US 2020/073788 A1 (SAHA DIPTIKALYAN [IN] ET AL) 5 March 2020 (2020-03-05) * paragraphs 34 and 57-83 * | 1-8 | |

TECHNICAL FIELDS SEARCHED (IPC)

G06N
G06F

The present search report has been drawn up for all claims

| Place of search | Date of completion of the search | Examiner |
|---|---|---|
| The Hague | 9 February 2022 | Szymanski, Francois |

EPO FORM 1503 03.82 (P04C01)

## ANNEX TO THE EUROPEAN SEARCH REPORT
## ON EUROPEAN PATENT APPLICATION NO.

EP 21 19 5587

This annex lists the patent family members relating to the patent documents cited in the above-mentioned European search report.
The members are as contained in the European Patent Office EDP file on
The European Patent Office is in no way liable for these particulars which are merely given for the purpose of information.

09−02−2022

| Patent document cited in search report | | Publication date | Patent family member(s) | | Publication date |
|---|---|---|---|---|---|
| US 2020073788 | A1 | 05−03−2020 | US | 2020073788 A1 | 05−03−2020 |
| | | | US | 2021117314 A1 | 22−04−2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. MEHRABI ; F. MORSTATTER ; N. SAXENA ; K. LERMAN ; A. GALSTYAN.** A Survey on Bias and Fairness in Machine Learning. *arXiv:1908.09635.,* 23 August 2019
- **BELLAMY, R. K. ; DEY, K. ; HIND, M. ; HOFFMAN, S. C. ; HOUDE, S. ; KANNAN, K. ; NAGAR, S.** AI Fairness 360: An extensible toolkit for detecting, understanding, and mitigating unwanted algorithmic bias. *arXiv:1810.01943,* 2018
- Fairness definitions explained. **VERMA, S. ; RUBIN, J.** 2018 IEEE/ACM International Workshop on Software Fairness (FairWare). IEEE, May 2018, 1-7
- **DWORK, C. ; HARDT, M. ; PITASSI, T. ; REINGOLD, O. ; ZEMEL, R.** Fairness through awareness. *Proceedings of the 3rd innovations in theoretical computer science conference,* January 2012, 214-226
- **ZLIOBAITE, I.** On the relation between accuracy and fairness in binary classification. *arXiv:1505.05723,* 2015
- **FUKUCHI, K. ; KAMISHIMA, T. ; SAKUMA, J.** Prediction with model-based neutrality. *IEICE TRANSACTIONS on Information and Systems,* 2015, vol. 98 (8), 1503-1516
- **FELDMAN, M. ; FRIEDLER, S. A. ; MOELLER, J. ; SCHEIDEGGER, C. ; VENKATASUBRAMANIAN, S. ; CERTIFYING AND REMOVING DISPARATE IMPACT.** *proceedings of the 21th ACM SIGKDD international conference on knowledge discovery and data mining,* August 2015, 259-268
- **CHOULDECHOVA, A.** Fair prediction with disparate impact: A study of bias in recidivism prediction instruments. *Big data,* 2017, vol. 5 (2), 153-163
- **HARDT, M. ; PRICE, E. ; SREBRO, N.** Equality of opportunity in supervised learning. *Advances in neural information processing systems,* 2016, 3315-3323
- **NARAYANAN, A.** Translation tutorial: 21 fairness definitions and their politics. *Proc. Conf. Fairness Accountability Transp., New York, USA,* February 2018
- **BERK, R. ; HEIDARI, H. ; JABBARI, S. ; KEARNS, M. ; ROTH, A.** Fairness in criminal justice risk assessments: The state of the art. *Sociological Methods & Research,* 2018
- **ŽLIOBAITĖ, I.** Measuring discrimination in algorithmic decision making. *Data Mining and Knowledge Discovery,* 2017, vol. 31 (4), 1060-1089